# EUROPEAN PATENT SPECIFICATION

(11) **EP 3 541 196 B1**
(45) Date of publication and mention of the grant of the patent: **31.03.2021**
(21) Application number: 17833020.5
(22) Date of filing: 17.10.2017
(51) Int. Cl.: A23G 1/00, A23G 1/50, A23G 1/54, A23G 1/56, B65D 85/804, A23L 2/39, A23L 2/395

(54) **COCOA-BASED MIXTURE FOR EXTRACTING ESPRESSO BEVERAGES, PROCESS FOR PREPARING SUCH MIXTURE, AND CAPSULE FOR PREPARING SUCH BEVERAGE**
KAKAOBASIERTE MISCHUNG ZUR EXTRAKTION VON ESPRESSOGETRÄNKEN, VERFAHREN ZUR HERSTELLUNG DIESER MISCHUNG UND KAPSEL ZUR HERSTELLUNG DIESES GETRÄNKS
MÉLANGE À BASE DE CACAO POUR L'EXTRACTION DE BOISSONS EXPRESSO, PROCÉDÉ DE PRÉPARATION D'UN TEL MÉLANGE ET CAPSULE POUR PRÉPARER UNE TELLE BOISSON

(30) Priority: 21.11.2016 IT 201600116679
(43) Date of publication of application: 25.09.2019
(73) Proprietor: Venchi S.p.A., 12040 Castelletto Stura (CN) (IT)
(72) Inventor: CAVICCHIOLI, Massimiliano, I-12040 Castelletto Stura (CN) (IT)
(74) Representative: Garavelli, Paolo
(86) International application number: PCT/IT2017/000229
(87) International publication number: WO 2018/092166

(56) References cited:
- EP-A1- 0 891 716
- EP-A1- 1 917 864
- EP-A2- 0 169 319
- WO-A1-2011/039027
- US-A1- 2003 005 826
- US-A1- 2010 028 495

## Description

The present invention relates to a cocoa-based mixture for extracting espresso beverages, to a process for preparing such mixture, and to a capsule containing the mixture for preparing such beverage.

In particular the present invention relates to a mixture based on cocoa paste for extracting an espresso beverage, and to a capsule containing the mixture, from which the espresso beverage is extracted by injecting a pressurized liquid, typically water, in the capsule. The present invention is defined in the appended claims.

Machines are known for preparing espresso beverages which use capsules containing ground coffee or mixtures of water-soluble powders and which are used for preparing espresso beverages both by infusion and by dissolution of mixtures of substances, for example cocoa-based mixtures, which contain substances adapted to improve their solubility in water. Examples of cartridges containing cocoa-based mixtures for the extraction of espresso drinks are given in US 2010/028495 A1.

These machines, when they are used with capsules containing cocoa-based mixtures, are not satisfactory and have the following problems: a problem is caused by the fact that, since every machine uses capsules with different shape and size, it is difficult to obtain a beverage, which keeps the same features with the different machines and capsules.

Another problem is caused by the difficulties which are encountered to completely dissolve the cocoa-based mixture in the liquid without leaving residues inside the capsule, unless emulsifying or stabilizers are used, or cocoa-based raw material which have been subjected to solubilizing processes, such as for example potassium coating of the cocoa powder, which can alter taste and quality of the beverage.

Object of the present invention is providing an innovative cocoa-based mixture for extracting an espresso beverage, a process for preparing such beverage and a capsule containing such beverage, which does not contain additives and which has a high quality, keeping the organoleptic features of the basic mixture.

The above and other objects and advantages of the invention, as will appear from the following description, are obtained with a cocoa-based mixture for extracting espresso beverages, a process for preparing such mixture and a capsule containing such beverage as claimed in the independent claims.

Preferred embodiments of the present invention are the subject matter of the dependent claims.

The present invention will be better described by a preferred embodiment thereof, provided as a non-limiting example, with reference to the enclosed drawings, in which:
- Figure 1 is a flow diagram of the process for preparing the cocoa-based mixture for extracting espresso beverages according to the present invention;
- Figures 2, 2a, 2b, 2c, 2d, 2e, 2f are views of a first embodiment of a capsule for preparing a beverage according to the present invention;
- Figures 3, 3a, 3b, are views of a second embodiment of a capsule for preparing a beverage according to the present invention;
- Figures 4, 4a, 4b, 4c, 4d, 4e, 4f, 4g are views of a third embodiment of a capsule for preparing a beverage according to the present invention;
- Figure 5 is a schematic sectional view of a tempering machine of the plant for producing the cocoa-based mixture for extracting espresso beverages according to the present invention;
- Figures 6, 6a are two views of a grinding machine of the plant for producing the cocoa-based mixture for extracting espresso beverages according to the present invention; and
- Figure 7 is a perspective view of a sieving machine of the plant for producing the cocoa-based mixture for extracting espresso beverages according to the present invention.

With reference to the Figures, preferred embodiments of the cocoa-based mixture for extracting espresso beverages, of the process for preparing such mixture and of the capsule for preparing such beverage of the present invention are shown and described.

The cocoa-based mixture for extracting espresso beverages of the invention comprises grains of cocoa mass having sizes included between 500 µm and 4000 µm, covered with a film of maltodextrins, so that the covering of maltodextrins represents a percentage included between 5% and 20% in weight of the finished product; preferably, the cocoa-based mixture for extracting espresso beverages of the invention comprises grains of cocoa mass having sizes included between 1250 µm and 2500 µm, covered with a film of maltodextrins, so that the covering of maltodextrins represents a percentage included between 12% and 13% in weight of the finished product.

Herein below the technical sheets are included for two examples of cocoa and maltodextrin mass or paste, which can be used in the cocoa-based mixture for extracting espresso beverages of the invention.

### TECHNICAL SHEET

### COCOA PASTE

| | |
|---|---|
| **Legal denomination:** | Cocoa paste |
| **Typical composition:** | Cocoa paste 100.0% |

### Additional item information

### Appearance: brown

| | | |
|---|---|---|
| HUMIDITY | max 2% | IOCCC1(1952) |
| FAT MATERIAL ON SUBSTANCE SEC | 50.0-54.0% | IOCCC14(1972) |
| pH | max 6.0 | IOCCC15(1972) |
| SKINS ON BROAD BEANS WITHOUT | | |
| ALKALIS | max 1.75% | |
| ASHES ON SUBSTANCE SEC. DEGREAS. | max 10.0% | IOCCC16 (1973) |

### Nutritional data computed on 100 g (based on literature values)

| | |
|---|---|
| ENERGETIC VALUE | 587 kcal |
| ENERGETIC VALUE | 2455 kJ |
| TOTAL PROTEINS | 12.1 g |
| MILK PROTEINS | 0.0 g |
| TOTAL CARBOHYDRATES | 5.6 g |
| SUGARS (MONO+DISACCHARIDES) | 0.3 g |
| POLYOLS | 0.0 g |
| AMID | 5.3 g |
| TOTAL FATS | 52.5 g |
| SATURATED FATS | 33.1 g |
| MONO-UNSATURATED FATS | 17.8 g |
| POLY-UNSATURATED FATS | 1.6 g |
| TRANS (AGT) TOTAL FAT ACIDS | 0.0 g |
| AGT (BOTANIC ORIGIN) | 0.0 g |
| CHOLESTEROL | 0.0 mg |
| ORGANIC ACIDS | 1.70 g |
| FOOD FIBRES | 19.2 g |
| TOTAL ALKALOIDS | 1.6 g |
| POLY-HYDROXY-PHENOLS | 3.1 g |
| CAFFEINE | 0.2 g |
| THEOBROMINE | 1.4 g |
| ALCOHOL | 0.0 g |

### TECHNICAL SHEET

### MALTODEXTRINS (19 DE)

Product deriving from the enzymatic hydrolysis of maize amid.

| | |
|---|---|
| **Color** | White |
| **Appearance** | Homogeneous |
| **Texture** | Powder |
| **Taste** | Neutral sweet taste |

### Chemical-physical characteristics

| | |
|---|---|
| Proteins | < 0.25% |
| D.E. | 18 ± 1 |
| Sulphated ashes | < 1% |
| Humidity | 5 ± 1% |
| SO₂ | < 10 mg/kg |
| pH | 3.5-5 |

### Mean % of carbo-hydrates

| | |
|---|---|
| D-glucose | 1-2% |
| Maltose | 5-6% |
| Maltotrioses | 13% |
| Polysaccharides | 77-82% |
| P.A.C. | 23 |
| P.OR.D. | 9 |

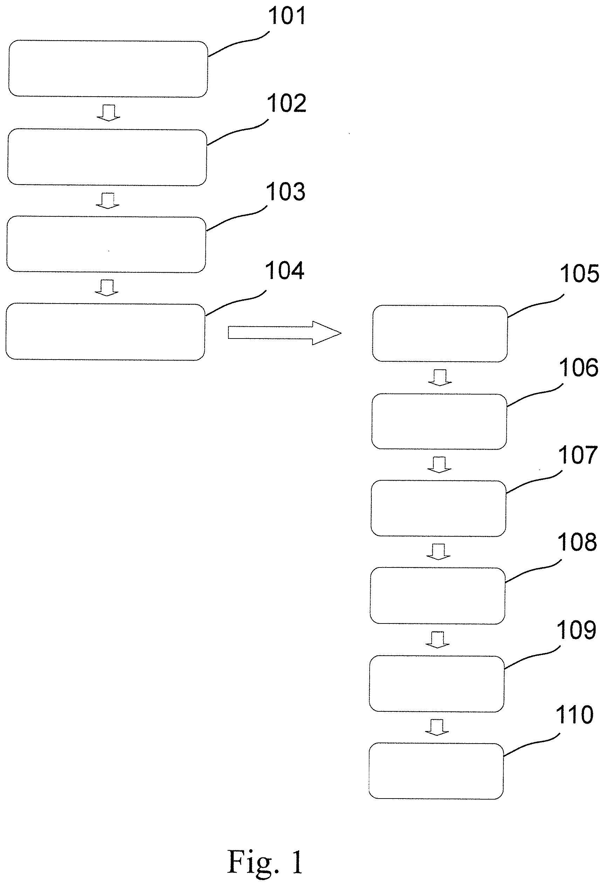

With reference to Figure 1, the process for preparing the cocoa-based mixture for extracting espresso beverages of the present invention comprises the following steps:
- a step 101 of selecting and weighing raw material; weighing of the components of the mixture directly occurs inside heated storage tanks, which allow melting the raw material, given by cocoa masses (also called cocoa in paste, cocoa paste or cocoa liquor);
- a step 102 of melting and mixing raw material inside the heated storage tanks, which is performed at a melting temperature included between 35°C and 70°C, preferably between 50°C and 55°C, for a melting time of 24 hours;
- a step 103 of mixture tempering, in which a crystallization process occurs for the lipid fraction of the cocoa contained in the cream produced in step 102, preferably through a thermal exchange by conduction between a water chamber and a chamber containing the cream, said chambers being adjacent; the step 103 of mixture tempering occurs by means of a tempering machine of a known type, whose tempering column is composed of overlapped thermal exchange disks.

Every disk is composed of a water chamber and of an adjacent chocolate chamber, between which the thermal exchange by conduction occurs. Inside each chocolate chamber, there is a mixer disk, actuated by a central shaft, which allows keeping the product homogeneous and then guaranteeing a uniform distribution of the temperature and consequently the formation of crystallization nucleuses of the cocoa butter. The product advancement through the tempering column occurs through the force generated by a pump.

The tempering art consists in inducing the formation of a well-defined homogeneous crystalline structure, wherein the presence of thermodynamically more stable crystals is prevailing.

In particular, inside a product mass, crystallization nucleuses are created for the lipid fraction of the cocoa, before the mass itself is further worked. In a controlled process, together with a simultaneous and intense mixing movement, the product is cooled so that inside it the so-called crystallization germs are formed. At a stabilization level, the mass is heated in such a way that the unstable crystal are melted and a strong prevalence of stable crystal nucleuses remains in the product.

The crystallization process allows guaranteeing the correct storage of the texture of the product in time, opposing undesired phenomena such as the separation of the lipid fraction from the non-lipid fraction.

The temperatures of cream and cooling water in the tempering step 103 are as follows:
- Temperature of inlet mixture from 35°C to 60 °C, preferably from 45°C to 50 °C;
- Tempering temperature from 23.5 °C to 36.5 °C, preferably from 29.5 °C to 30.5 °C;
- Cooling water temperature from 11 °C to 19 °C, preferably from 14 °C to 16 °C;
- Reviving temperature from 24 °C to 38 °C, preferably 31 °C;
- Maintenance water temperature from 24 °C to 38 °C, preferably 31 °C:
- Mixture return temperature from 26 °C to 41 °C, preferably from 33 °C to 34 °C;
- Return water temperature from 32 °C to 48 °C, preferably 40 °C.

In a following moulding step 104, the mixture produced at the end of the previous step 103 is poured in moulds for forming the waffles.

In this step 104, the product going out of the tempering machine is sent inside a pouring tank, connected to a plate equipped with several nozzles, which allow positioning the product, suitably tempered, inside the recesses present in the mould.

For example, a system of rotors and pistons allows exactly dosing the amount of tempered mass to be inserted inside each seat of the mould.

The product is then sent to a refrigerating system divided into four areas or stages with different temperatures, in particular a first stage with temperature from 5.0 °C to 8.0 °C, a second stage with temperature from 2.0 °C to 5.0 °C, a third stage with temperature from 5.0 °C to 8.0 °C, a fourth stage with temperature from 8.0 °C to 12.0 °C, which allow the contraction of the cocoa butter and then the easy removal of the waffles from the mould.

The process goes on with a step 105 of grinding waffles, wherein the waffles of cocoa mass produced in step 104 are reduced to grains by means of a physical-mechanical process of reduction into pieces, performed for example by means of a grinding machine 20.

After the product has been reduced to grains, in a sieving step 106 it is sent, for example, to a sieving machine 30 to select the grains with sizes included between 500 µm and 4000 µm, preferably between 1250 µm and 2500µm.

The product going out of the grinding rollers is sent to a double sieving system of the sieving machine 30, which allows removing the coarse product and the too-fine product, including the powders.

The size of the meshes of the upper vibrating sieve is 4000 µm, preferably 2500 µm, the size of the meshes of the lower vibrating sieve is 500 µm, preferably 1250 µm.

The particle size is a major aspect for the good operation (use by the consumer) of the capsules, since the grain size affects the solubilizing speed of the product and consequently the complete emptying of the capsules.

Excessively big grains are not adequately solubilized by water and consequently the product does not completely go out of the capsule. Similarly, excessively small grains, or the presence of product flour (powder), determines a packing and then clogging of the exit ways of the beverage from the capsule.

In a step 107 there is the covering of the grains with a maltodextrins film.

During this step 107, the grains selected in the sieving step 106 are sprinkled with a spray of a mixture of water and maltodextrins (preferably maltodextrin 19 DE) in a ratio 1:1, proceeding through following stages waiting, after each injection of solution, for the complete evaporation of water. Preferably, the process goes on until a 15% increase of weight occurs: in this way, a covering of maltodextrins which represents 12-13% of the finished product is obtained.

Step 107 is performed inside a polishing panning machine, in which grains suitably sieved in the previous step 106 are inserted. The machine is operated: the panning machine starts rotating around its own axis and the product therein, due to the presence of a system of suitably arranged fins, is continuously kept agitated and mixing.

The covering with maltodextrins plays two roles: on one hand it allows storing and stabilizing the product, while on the other hand it exerts an influence on the organoleptic features of the product.

The maltodextrins film protects the grains, insulating them from the external environment: the presence of about 50% of cocoa butter inside the used mass mixtures makes the product "sensitive" to smell molecules present in the environment, tending to absorb them. The maltodextrins film creates a barrier around the grain of cocoa mass, insulating it and cooperating, together with the packaging system, to guarantee the product quality.

From a mechanical point of view, the maltodextrins also play an important role in the product rheology, particularly during the storage and handling steps. At high ambient temperatures (Temperature > 32-33 °C), the cocoa mass tends to melt, thereby triggering a product packing process: bare granules tend to stick one another, creating thereby masses which can be reached with difficulty by the water flow coming from the delivering machine with domestic use. Penetrating the compact masses with difficulty, the pressurized hot water chooses alternative ways, so that the product is not correctly solubilized and remains inside the capsule.

The maltodextrins film solves this problem, by creating a protecting barrier round each granule, and, being much less sensitive to temperatures with respect to cocoa butter, it allows making the product stable also at higher ambient temperatures. Subjected to a thermal stress test, the grains of coated cocoa mass with maltodextrins film demonstrate their resistance to temperatures of 35-36 °C for 5 house, without observing meaningful packing phenomena.

From the organoleptic point of view, the presence of maltodextrins contrasts the acidity of the cocoa masses, contributing to keep the product more pleasing to the palate.

With the step 107 of covering the grains with the maltodextrins film, the process for preparing the cocoa-based mixture for extracting espresso beverages of the invention ends.

Then, a packaging is performed for the cocoa-based mixture in the capsules, which comprises the following steps:
- a step 108 of filling the capsules with the cocoa-based mixture;
- a step 109 of thermo-welding the capsules, in which capsules are closed through thermal welding;
- a step 110 of secondary packaging capsules in packages containing a plurality of capsules.

The amount of mixture inserted inside every capsule in the capsule-filling step 108 changes depending on the taste intensity that has to be obtained in the delivered product, and changes, also depending on the delivering system and then on the type of used capsule, in a range included between 5 g and 13.5 g, preferably included between 6 g and 9 g.

Below 6 g, the taste is not characterizing enough, while above 9 g phenomena can be observed where the mass is not completely dissolved in a time compatible with the delivery of an amount of product comparable with the normal or medium-long espresso coffee.

Three embodiments of capsules for preparing the cocoa-based espresso beverage of the invention are provided.

In particular, three type of capsules have been obtained, which are compatible with the most widespread systems of espresso machines for domestic use:
A) first capsule 1;
B) second capsule 2;
C) third capsule 3.

The different delivery systems require the adoption of two different packaging techniques, in particular of the thermo-welding step 109, using a triple metal-coated film (PET-AL-PE) or a bi-oriented peelable plastic film (PET 12 + PESO peelable on PVC), described herein below and which comply with the different infusion techniques of pressurized hot water handled by the espresso machine.

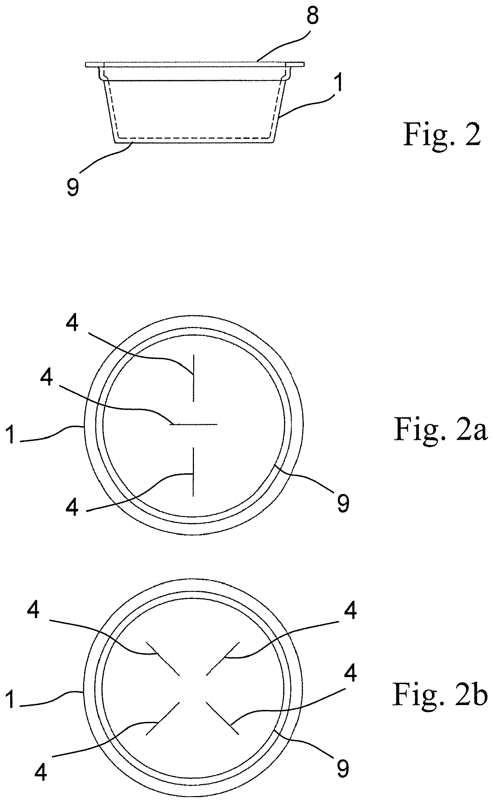

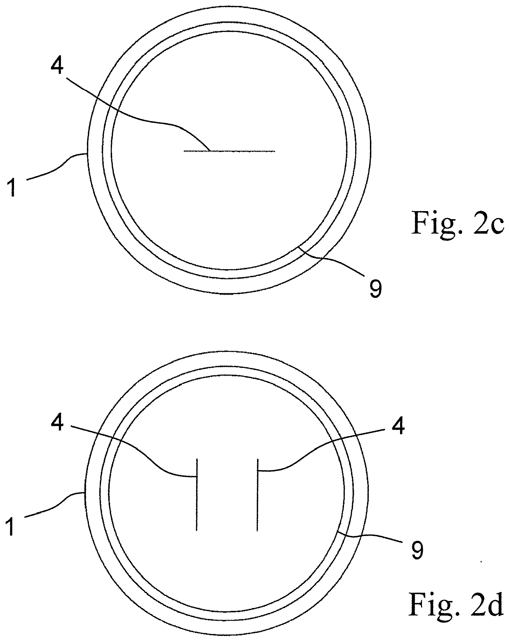

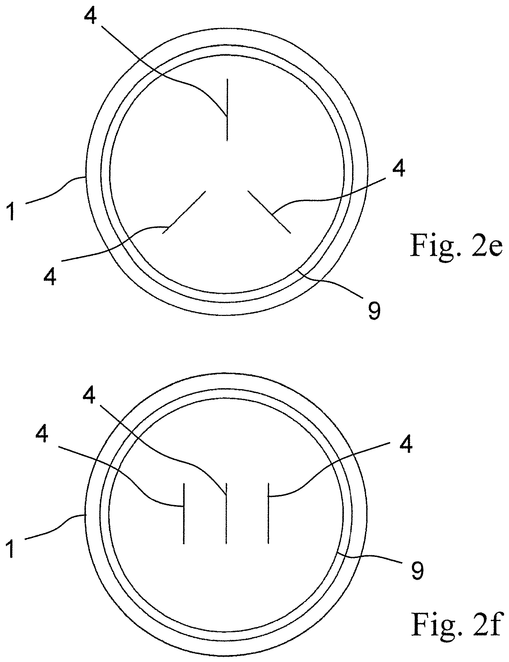

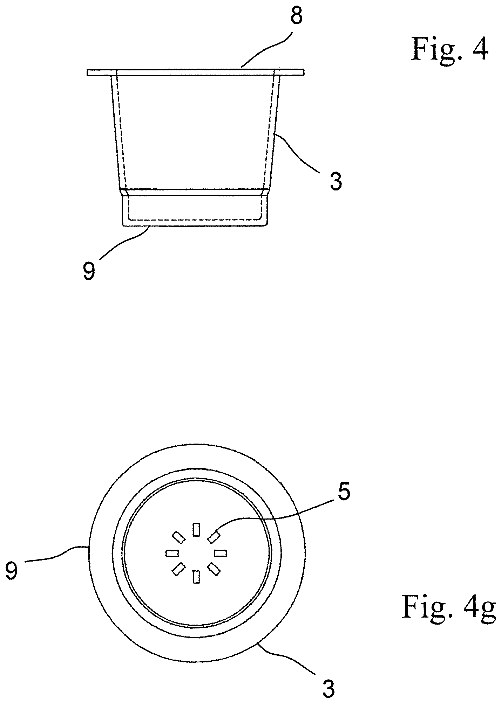

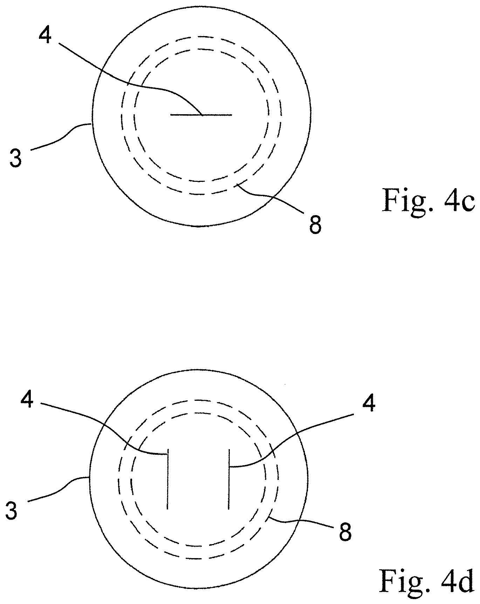

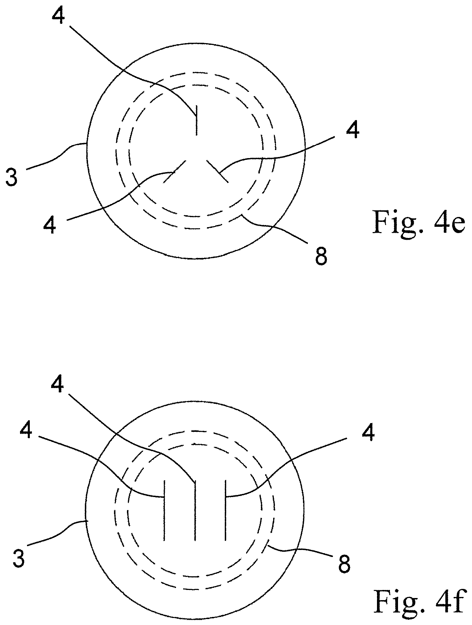

The capsule 1, 2, 3 for preparing the cocoa-based espresso beverage comprises a covering 8 and a bottom 9, and, in a first embodiment of the invention, comprises at least one etching or cutting 4 obtained on the covering 8 or on the bottom 9 of the capsule; preferably, the capsule 1, 2, 3 comprises two or three parallel etchings 4, as shown in Figures 2d, 2f, 4d, 4f.

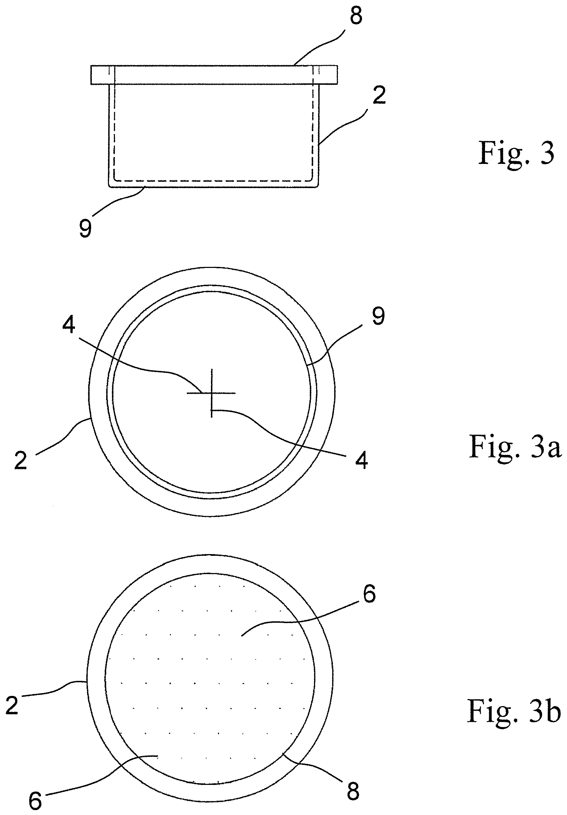

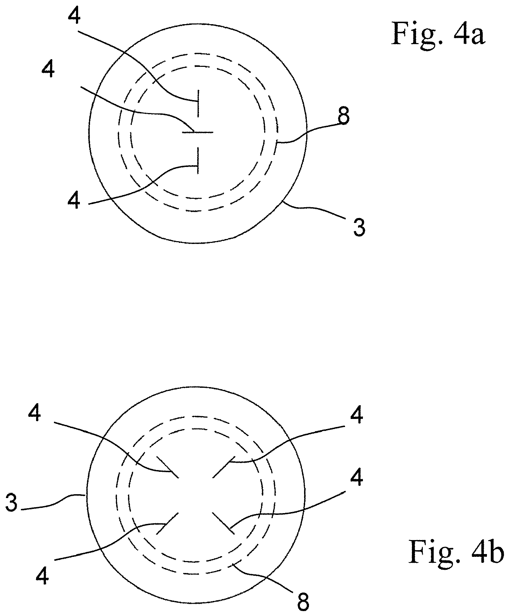

In a second embodiment, the capsule 1, 2, 3 of the invention comprises at least two mutually perpendicular etchings 4; preferably, the capsule 1, 2, 3 comprises a central etching and two side etchings, preferably perpendicular thereto, as shown in Figures 2a, 4a; alternatively, the two mutually perpendicular etchings 4 are arranged as a cross, as shown in Figure 3a.

In a third embodiment, the capsule 1, 2, 3 of the invention comprises at least three radial etchings 4; preferably the capsule 1, 2, 3 comprises three or four radial etchings or cuttings 4, as shown in Figures 2b, 2e, 4b, 4e.

The capsule 1, 2, 3 of the invention can further comprise holes 5, 6, which are obtained on the bottom 9 when the cuttings 4 are obtained on the covering 8, or obtained on the covering 8 when the cuttings 4 are obtained on the bottom 9.

As regards the first capsule 1 shown in Figures 2, 2a, 2b, 2c, 2d, 2e, 2f the capsule is closed through thermo-welding with the covering 8 obtained with a triple metal-coated film (PET-AL-PE). During the process of delivering pressurized hot water through the head of the espresso machine, the covering 8 is drilled while the exit of the espresso beverage is guaranteed by making at least one etching or cutting 4 at the bottom 9 of the capsule, for example three parallel, 10-mm etchings placed at a distance of 7-8 mm one from the other, obtained at the capsule center.

This type of first capsule 1 can be obtained with different sizes in order to house a maximum amount of grains equal to 9 g in a first embodiment, and to 13.5 g in a second embodiment. Preferably, an optimum range for the product amount has been found, taking into account the final result and the amount of melting of the mass inside the capsule, included between 7 and 8.5 g.

The second capsule 2, shown in Figures 3, 3a, 3b, is closed with a covering 8 obtained from a bi-oriented peelable plastic film (PET 12 + PE50 pealable on PVC) which, preferably, must be micro-holed to guarantee the penetration of water at the capsule head; to guarantee a uniform distribution of water and then a progressive and distributed melting of the cocoa-based mixture, preferably a plurality of micro-holes 6 are obtained, for example fifty micro-holes 6 whose diameter is included between 0.1 mm and 0.2 mm, uniformly distributed on the surface of the covering 8 of the plastic film closing the second capsule 2. The exit of the espresso beverage is guaranteed by the presence on the bottom of the second capsule 2 by a system of cuttings 4, preferably arranged as a cross, which opens by pressure and which performs the same principle of water-cocoa mass emulsion obtained in the other delivery systems being described, namely obtained through the etching of the bottom 9 of the capsule itself or of the covering 8 with triple film applied when closing. The amount of product inside the second capsule 2 can change in a range included between 7 and 8.5 g.

As regards the third capsule 3, shown in Figures 4, 4a, 4b, 4c, 4d, 4e, 4f, 4g, the closure of the capsule is obtained through thermo-welding with triple metal-coated film. During the delivery process, which occurs through a plurality of holes 5, preferably six holes, radially arranged on the bottom 9 of the capsule 3, the pressurized hot water penetrates into the capsules and solubilizes the cocoa mass-based mixture; the exit of the espresso beverage is guaranteed preferably from at least three etchings 4 obtained on the bottom 9 of the third capsule 3; preferably the etchings 4 are a central etching, 10 mm long, and two etchings, preferably perpendicular thereto, whose length is 8 mm, placed at a distance of 4 mm. The maximum product amount inside the capsule can change in a range included between 6 and 6.8 g.

In the delivery systems which use the above-described capsules, the size and the arrangement of the cuttings 4 play a major role in determining the features of the product delivered by the machine. The thin cuttings 4 determine the forced passage of pressurized hot water and of the heat-solubilized product, making an emulsion which confers to the delivered espresso beverage creamy features which cannot be obtained through other exit solutions (for example, holes).

The plant for producing the cocoa-based mixture for extracting espresso beverages of the invention will now be described. The plant per se is not part of the invention.

The plant comprises heated storage tanks, a tempering machine 10, a grinding machine 20, a sieving machine 30, and a panning.

In the heated storage tanks, the step 101 of selecting and weighing raw material and the step 102 of melting and mixing raw material are performed.

In the tempering machine 10, the step 103 of mixture tempering is performed, wherein the crystallization process occurs for the lipid fraction of the cocoa contained in the cream produced in step 102.

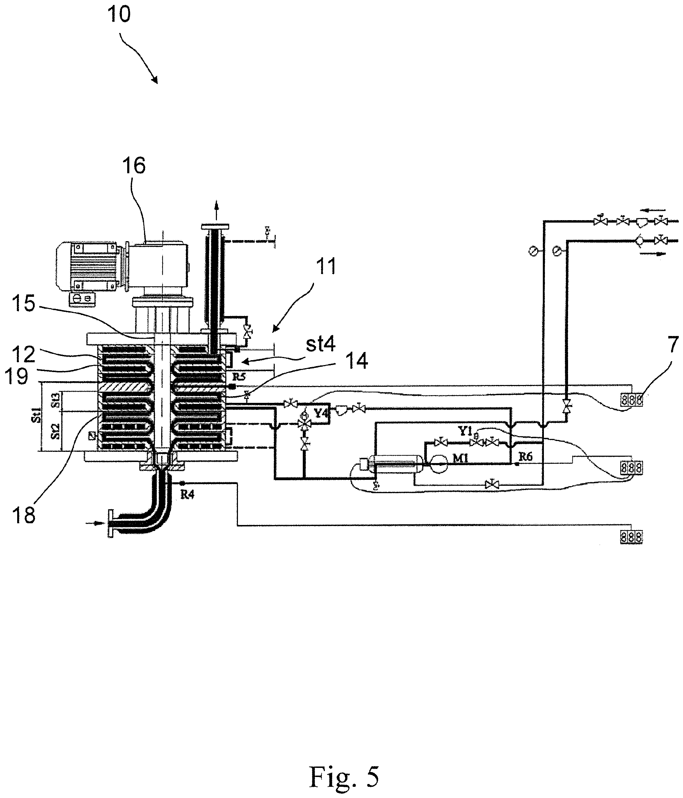

The tempering machine 10, shown in Figure 5, comprises a tempering column 11 comprising overlapped thermal exchange disks 18.

Every thermal exchange disk 18 comprises a water chamber 12, adapted to be crossed by the cooling water, and a product chamber 19, adapted to be crossed by the cream to be tempered.

Every product chamber 19 comprises a mixing disk 14 rotatable therein, connected to a central shaft 15 actuated by a motor-reducer 16 with tapered gears placed on the upper part of the tempering machine 10 which is supplied with reduced pressure.

Preferably, the central shaft 15 is equipped with an accessible gasket, and the lower support of this shaft is lubricated by the product itself and therefore does not require any maintenance.

Since the mixing disks 14 does not exert any transport action, the tempering machine 10 is connected to a pump, which allows regulating the cream flow-rate, making it flow from bottom to top.

The tempering column 11 comprises a lower cooling level St1 and an upper mixing level St4, shown in Figure 5; the cooling level St1 is in turn divided into a pre-cooling level St2 and into a crystallization level St3; water continuously circulates through the last disk of the cooling level St1; this disk forms the crystallization level St3 and always cools with a 100% load. In this way, with a constant cream flow-rate, the same water entry/exit temperatures are guaranteed, in addition to then same cream entry/exit temperatures, so that a constant temperature is reached.

Simultaneously, water of the cooling level St1 is injected in the so-called pre-cooling level St2 through a 3/2 modulating valve with continuous operation Y4. According to the cooling needs, this valve Y4 increases or reduces the flow-rate of the cooling water in the pre-cooling level St2. Due to the bypass control of the 3/2 valve Y4, no pressure or flow-rate variations occur.

The tempering machine 10 comprises a temperature control system, which operates in the cooling level St1 with two overlapped regulating circuits. The circulation temperature of the cooling water is regulated together with a probe R6 and a solenoid valve Y1 through a regulator 7.

During the passage of the product through the cooling level St1, the temperature variations on the product entry side R4 are completely detected by the automatic control. This regulation is automatically adapted should the cream flow-rate change between 50 and 100% of the rated power.

Also in the mixing level St4, water continuously passes through the thermal exchange disks 18.

In this mixing level St4, the product temperature is not regulated, but instead the circulating water temperature is regulated, to reduce to a minimum the cream temperature variations.

The following moulding step 104 is performed in a pouring tank, connected to a plate equipped with numerous nozzles, which allow positioning the product exiting from the tempering machine 10 inside the recesses present in a mould.

A system of rotors and pistons allows exactly dosing the amount of tempered mass to be inserted inside each seat of the mould.

The product is then sent to the refrigerating system divided into four areas with different temperatures, which allow the contraction of the cocoa butter and then the easy removal of the waffles from the die, in order to end step 104.

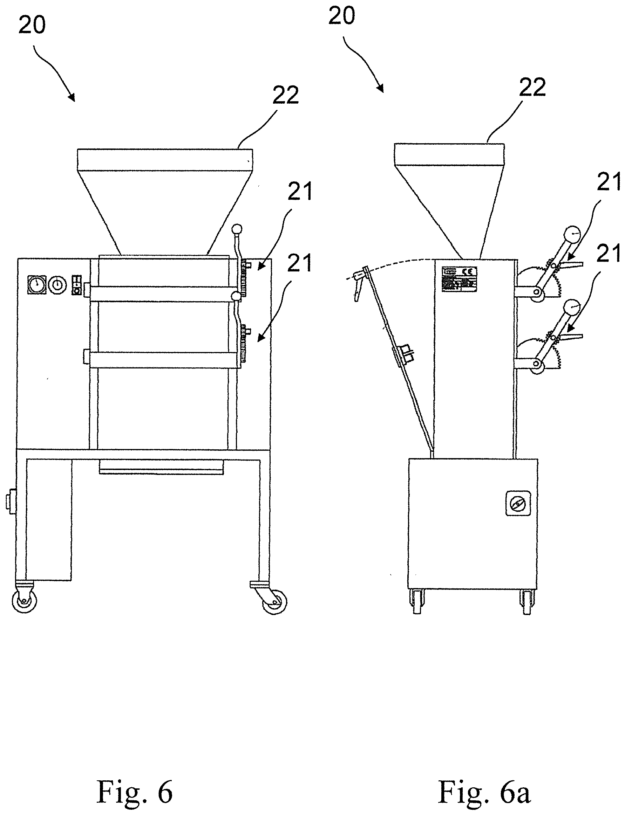

The waffles are then reduced into pieces (grains) by the grinding machine 20, shown in Figures 6 and 6a, which performs the step 105 of grinding waffles, wherein the waffles of cocoa mass produced in step 104 are reduced to grains by means of a physical-mechanical process performed inside two cutting modules 21 placed in series, which allow dividing the process into two steps, in order to reduce to a minimum the friction forces and therefore the heating of the grained cocoa mass, which would determine the partial melting, and with a following packing of the product inside the grinding machine 20.

The grinding machine 20 is supplied through a loading belt, which allows taking to a loading hopper 22 of the grinding machine 20 the cocoa mass wafers produced in the previous step 104.

The loading belt preferably comprises a cup-type belt supplied through a hopper, and is connected to the grinding machine 20 by a vibrating plane, whose vibration intensity allows regulating the flow of waffles of cocoa mass produced in step 104 entering the grinding machine 20.

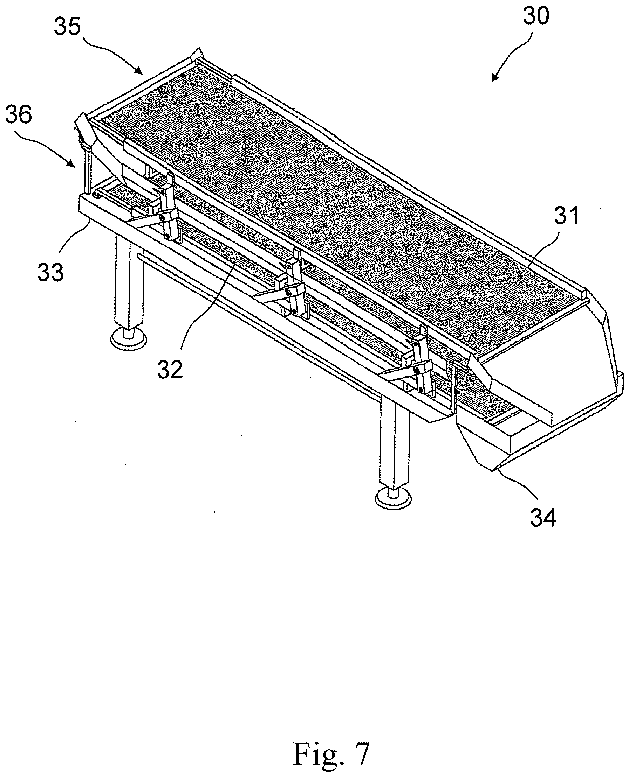

In the sieving machine 30 shown in Figure 7, the step 106 of sieving grains is performed, in which, through vibrating sieving sieves 35, 36, the different granulometries of grains produced by the grinding machine 20 are separated and cleaned.

The sieving machine 30 comprises two nets or carpets 31, 32, for example made of AISI 304 steel, which are different as regards density of meshes: the first net 31 is placed on top, and has a mesh distance equal to 4000 *µ*m, preferably equal to 2500 µm, and the second net 32 is arranged in parallel to the first net 31 below it, with a mesh distance which is equal to 500 µm, preferably equal to 1250 µm. The two carpets 31, 32 are connected to a vibrating system, which at the same time enables the advancement of the product and its sieving or selection.

The sieving machine 30 allows dividing the product exiting the grinding machine 20 into three different sieves:
a) over-sieve, composed of particles whose sizes are greater than 4 mm, preferably greater than 2-2.5 mm, which goes the whole length of the upper carpet 31 going out at its tail in parallel to the entry product; the size of this product is not suitable for making the capsules, since it would require an infusion volume of hot water greater than the one compatible with the preparation of a normal espresso coffee, which is normally delivered by the espresso machines for domestic use;
b) under-sieve, composed of the particles whose sizes are lower than 0.5 mm, preferably lower than 1-1.25 mm, which crosses the meshes of both nets 31, 32 and is then collected in a metallic tank 33 placed below the nets and occupying an equivalent surface; the size of this product is not suitable for making the capsules, since it determines a product packing inside the capsules;
c) suitable product, composed of the particles which go for the whole length of the lower carpet or second net 32, going out from an outflow mouth 34 placed orthogonal to the advancement flow of the product, being therefore collected laterally to the machine itself; these are the particles having sizes included between 0.5 and 4 mm, preferably between 1.25 and 2.5 mm.

In the panning machine, the step 107 of covering the grains with the maltodextrins film is performed.

Function of the panning machine is keeping the product under continuous stirring inside it, in order to enable the homogeneous distribution of the maltodextrins of covering on the grains.

Preferably the panning machine is shaped as a double frustum of cone with horizontal rotation axis, parallel to the bearing surface of the machine. An entry air flow is guaranteed by a turbine which allows highly increasing the drying efficiency of the machinery, concentrating the air flow on the particulate bed coated with the maltodextrins film.

During the rotation of the panning machine, the grains under stirring are sprinkled with the spray of the solution of maltodextrins and dried by means of the forced air from the turbine. Spraying occurs through following steps: the product is in fact sprinkled with the minimum amount of solution of maltodextrines enough to determine the complete and homogeneous distribution on the whole mass of product under stirring. The grains cannot be sprinkled with further amounts of solution of maltodextrins till the previous layer has been completely dried.

The process is repeated until the desired covering level has been reached, preferably when a 15% increase in weight has been obtained and a covering of maltodextrins is reached, which represents 12-13% of the finished product.

Finally, in known packaging machines, packaging of the cocoa-based mixture in the capsules is performed, with the step 108 of filling the capsules with the cocoa-based mixture, the step 109 of thermo-welding the capsule, and the step 110 of packaging the capsules in packages containing a plurality of capsules.

Advantageously, the cocoa-based mixture for extracting espresso beverages and the capsule for preparing such beverage of the invention allow obtaining a beverage by completely melting the cocoa-based mixture in the liquid without leaving residuals inside the capsule.

Advantageously, the cocoa-based mixture for extracting espresso beverages and the capsule for preparing such beverage allow making capsules which can be used with different types of machines, keeping the same characteristics of the delivered beverage.

## Claims

1. Cocoa-based mixture for extracting espresso beverages comprising grains of cocoa mass having sizes included between 500 µm and 4000 µm, said grains being then covered with a maltodextrins film so that the covering of maltodextrins represents a percentage included between 5% and 20% in weight of the mixture of grains of coated cocoa mass.

2. Cocoa-based mixture for extracting espresso beverages comprising grains of cocoa mass according to claim 1, **characterized in that** said grains of cocoa mass have sizes included between 1250 µm and 2500 µm, and are then covered with a maltodextrins film so that the covering of maltodextrins represents 12-13% in weight of the mixture of grains of coated cocoa mass.

3. Process for preparing the cocoa-based mixture for extracting espresso beverages according to claim 1, comprising the following steps:
- a step (101) of selecting and weighing raw material comprising cocoa masses;
- a step (102) of melting and mixing the raw material;
- a step (103) of mixture tempering, in which a crystallization process occurs for the lipid fraction of the cocoa contained in the cream produced in the step (102) of melting and mixing the raw material;
- a step (104) of moulding, wherein the mixture produced at the end of the step (103) of mixture tempering is poured in moulds for forming the waffles;
- a step of sending the product to a refrigerating system divided into four areas or stages with different temperatures, in particular a first stage with temperature from 5.0°C to 8.0 °C, a second stage with temperature from 2.0°C to 5.0 °C, a third stage with temperature from 5.0°C to 8.0 °C, a fourth stage with temperature from 8.0°C to 12.0 °C, which allow a contraction of the cocoa butter and then an easy removal of the waffles from the mould;
- a step (105) of grinding waffles, wherein the waffles produced in the step (104) of moulding are reduced to grains;
- a step (106) of sieving wherein, from the grains produced in the step (105) of grinding waffles, grains are selected whose sizes are included between 500 µm and 4000 µm;
- a step (107) of covering wherein the grains selected in the step (106) of sieving is covered with the maltodextrins film, so that the covering of maltodextrins represents a percentage included between 5% and 20% in weight of the mixture of grains of coated cocoa mass, during this step (107) the grains selected in the step (106) of sieving being sprinkled with a spray of a mixture of water and maltodextrins in a ratio 1:1, proceeding for following stages waiting, after each injection of solution, for the complete evaporation of water, the process preferably going on until a 15% weight increase occurs, in order to have a covering of maltodextrins which represents 12-13% of the finished product.

4. Capsule (1, 2, 3) for preparing an espresso beverage containing the cocoa-based mixture for extracting espresso beverages according to claim 1 or 2, said capsule (1, 2, 3) comprising a covering (8) heat-welded to a bottom (9), and at least one etching (4) obtained on the covering (8) or on the bottom (9) of the capsule (1, 2, 3).

5. Capsule (1, 2, 3) for preparing an espresso beverage according to claim 4, **characterized in that** it comprises two or three parallel etchings (4) .

6. Capsule (1, 2, 3) for preparing an espresso beverage according to claim 4, **characterized in that** it comprises at least two mutually perpendicular etchings (4).

7. Capsule (1, 2, 3) for preparing an espresso beverage according to claim 6, **characterized in that** it comprises a central etching (4) and two lateral etchings (4) perpendicular to said central etching (4).

8. Capsule (1, 2, 3) for preparing an espresso beverage according to claim 6, **characterized in that** the two mutually perpendicular etchings (4) are arranged as a cross.

9. Capsule (1, 2, 3) for preparing an espresso beverage according to claim 4, **characterized in that** it comprises at least three radial etchings (4) .

10. Capsule (1, 2, 3) for preparing an espresso beverage according to any one of claims 4 to 9, **characterized in that** it comprises holes (5, 6) obtained on the bottom (9) when the etchings (4) are obtained on the covering (8), or obtained on the covering (8) when the etchings (4) are obtained on the bottom (9).

11. Capsule (1, 2, 3) for preparing an espresso beverage according to claim 10, **characterized in that** it comprises a plurality of micro-holes (6) whose diameter is included between 0.1 mm and 0.2 mm, uniformly distributed on the surface of the covering (8).

12. Capsule (1, 2, 3) for preparing an espresso beverage according to claim 10, **characterized in that** it comprises a plurality of holes (5) obtained on the bottom (9) of the capsule (3).

13. Capsule (1, 2, 3) for preparing an espresso beverage according to any one of claims 4 to 12, **characterized in that** it is closed with a covering (8) heat-welded to the bottom (9) and obtained with a bi-oriented peelable plastic film.

14. Capsule (1, 2, 3) for preparing an espresso beverage according to any one of claims 4 to 12, **characterized in that** it is closed with a covering (8) heat-welded to the bottom (9) and obtained with a triple metal-coated film.

## Patentansprüche

1. Mischung auf Kakaobasis zur Extraktion von Espresso-Getränken, umfassend Kakaomassenkörner mit Abmessungen zwischen 500 & mgr; m und 4000 & mgr; m, wobei das Korn dann mit einem Maltodextrinfilm bedeckt wird, so dass die Maltodextrinbedeckung einen Prozentsatz darstellt, der zwischen 5% und 20% enthalten ist Gewicht der beschichteten Kakaomassenkornmischung.

2. Mischung auf Kakaobasis zur Extraktion von Espresso-Getränken, umfassend Kakaomassenkörner nach Anspruch 1, **gekennzeichnet dadurch, dass** das Kakaomassenkorn Abmessungen zwischen 1250 & mgr; m und 2500 & mgr; m aufweist und daher mit einem Maltodextrinfilm bedeckt ist, so dass die Maltodextrinbedeckung entspricht 12-13 Gew.-% der beschichteten Kakaomassenkornmischung.

3. Verfahren zur Herstellung der Mischung auf Kakaobasis zur Extraktion von Espresso-Getränken nach Anspruch 1, umfassend die folgenden Schritte:
- eine Phase (101) zur Auswahl und zum Wiegen von Rohstoffen einschließlich Kakaomassen;
- eine Phase (102) des Auflösens und Mischens von Rohstoffen;
- eine Gemischtemperierungsphase (103), in der der Kristallisationsprozess der Lipidfraktion des Kakaos in der in der Phase (102) des Schmelzens und Mischens von Rohstoffen hergestellten Creme stattfindet;
- einen Modellierungsschritt (104), bei dem die am Ende des Gemischtemperierungsschritts (103) erzeugte Mischung in Formen gegossen wird, um Wafer zu bilden;
- eine Phase des Sendens des Produkts zu einem Kühlsystem, das in vier Zonen oder Stufen mit unterschiedlichen Temperaturen unterteilt ist, insbesondere eine erste Stufe mit einer Temperatur von 5.0 °C bis 8.0 °C, eine zweite Stufe mit einer Temperatur von 2.0 °C bis 5.0 °C, eine dritte Stufe mit einer Temperatur von 5.0 °C bis 8.0 °C, eine vierte Stufe mit einer Temperatur von 8.0 °C bis 12.0 °C, die das Schrumpfen der Kakaobutter und damit das einfache Entfernen der Schoten aus der Form ermöglicht;
- einen Pod-Granulationsschritt (105), bei dem die im Modellierungsschritt (104) hergestellten Pods zu Körnern reduziert werden;
- einen Siebschritt (106), bei dem die Korngröße zwischen 500 & mgr; m und 4000 & mgr; m aus dem im Hülsenkomschritt (105) erzeugten Korn ausgewählt wird;
- einen Bedeckungsschritt (107), bei dem das im Siebschritt (106) ausgewählte Korn mit dem Maltodextrinfilm bedeckt wird, so dass die Bedeckung mit Maltodextrin einen Prozentsatz zwischen 5 und 20 Gew.-% der Mischung der beschichteten Kakaomasse darstellt Körner, während dieser Stufe (107) werden die in der Siebstufe (106) ausgewählten Körner mit einem Sprühnebel einer Mischung aus Wasser und Maltodextrin in einem Verhältnis von 1:1 besprüht, wobei aufeinanderfolgende Stufen durchlaufen werden und jede Injektion der Lösung abgewartet wird vollständige Verdampfung des Wassers, wobei der Prozess vorzugsweise fortgesetzt wird, bis eine Gewichtszunahme von 15% aufgezeichnet wird, um eine Bedeckung mit Maltodextrin zu erhalten, die etwa 12-13% des Endprodukts darstellt.

4. Kapsel (1, 2, 3) zur Herstellung eines Espresso-Getränks, das die Mischung auf Kakaobasis enthält, zur Extraktion von Espresso-Getränken nach Anspruch 1, wobei die Kapsel (1, 2, 3) eine Deckel (8) Wärme umfasst -versiegelt an einem Boden (9) und mindestens einem Einschnitt (4) am Deckel (8) oder am Boden (9) der Kapsel (1, 2, 3).

5. Kapsel (1, 2, 3) zur Herstellung eines Espresso-Getränks nach Anspruch 4, **dadurch gekennzeichnet, dass** sie zwei oder drei parallele Einschnitte (4) umfasst.

6. Kapsel (1, 2, 3) zur Herstellung eines Espresso-Getränks nach Anspruch 4, **dadurch gekennzeichnet, dass** sie mindestens zwei senkrecht zueinander stehende Einschnitte (4) umfasst.

7. Kapsel (1, 2, 3) zur Herstellung eines Espresso-Getränks nach Anspruch 6, **dadurch gekennzeichnet, dass** sie einen zentralen Einschnitt (4) und zwei seitliche Einschnitte (4) senkrecht zu diesem zentralen Einschnitt (4) umfasst.

8. Kapsel (1, 2, 3) zur Herstellung eines Espresso-Getränks nach Anspruch 6, **dadurch gekennzeichnet, dass** die beiden senkrecht zueinander stehenden Einschnitte (4) in einem Kreuz angeordnet sind.

9. Kapsel (1, 2, 3) zur Herstellung eines Espresso-Getränks nach Anspruch 4, **dadurch gekennzeichnet, dass** sie mindestens drei radiale Einschnitte (4) umfasst.

10. Kapsel (1, 2, 3) zur Herstellung eines Espresso-Getränks nach einem der Ansprüche 4 bis 9, **dadurch gekennzeichnet, dass** sie Löcher (5, 6) aufweist, die am Boden (9) angebracht sind, wenn die Einschnitte (4) sind auf der Abdeckung (8) oder auf der Abdeckung (8) gemacht, wenn die Einschnitte (4) auf der Unterseite (9) gemacht werden.

11. Kapsel (1, 2, 3) zur Herstellung eines Espresso-Getränks nach Anspruch 10, **dadurch gekennzeichnet, dass** sie mehrere Mikrolöcher (6) mit einem Durchmesser zwischen 0.1 mm und 0.2 mm umfasst, die gleichmäßig auf der Oberfläche des Abdeckung (8).

12. Kapsel (1, 2, 3) zur Herstellung eines Espresso-Getränks nach Anspruch 10, **dadurch gekennzeichnet, dass** sie mehrere Löcher (5) umfasst, die am Boden (9) der Kapsel (3) angebracht sind.

13. Kapsel (1, 2, 3) zur Herstellung eines Espresso-Getränks nach einem der Ansprüche 4 bis 12, **gekennzeichnet dadurch, dass** sie mit einem am Boden (9) heißversiegelten und hergestellten Deckel (8) verschlossen und hergestellt ist mit einer Kunststofffolie bi-orientiert abziehbar.

14. Kapsel (1, 2, 3) zur Herstellung eines Espresso-Getränks nach einem der Ansprüche 4 bis 12, **gekennzeichnet dadurch, dass** sie mit einem am Boden (9) heißversiegelten und hergestellten Deckel (8) verschlossen und hergestellt ist mit einem Dreifachfilm metallisiert.

## Revendications

1. Mélange à base de cacao pour l'extraction de boissons expresso comprenant des grains de masse de cacao ayant des dimensions comprises entre 500 µm et 4000 µm, ledit grain étant ensuite recouvert d'un film de maltodextrine de sorte que la couverture en maltodextrine représente un pourcentage compris entre 5% et 20% par poids du mélange de grains de masse de cacao enrobé.

2. Mélange à base de cacao pour l'extraction de boissons expresso comprenant des grains de masse de cacao selon la revendication 1, **caractérisé en ce que** ledit grain de masse de cacao a des dimensions comprises entre 1250 µm et 2500 µm, et est donc recouvert d'un film de maltodextrine tel que la maltodextrine recouvre représente 12-13% en poids du mélange de grains de masse de cacao enrobé.

3. Procédé de préparation du mélange à base de cacao pour l'extraction de boissons expresso selon la revendication 1, comprenant les phases suivantes:
- une phase (101) de sélection et de pesée des matières premières dont les masses de cacao;
- une phase (102) de dissolution et de mélange des matières premières;
- une phase de revenu du mélange (103), dans laquelle se déroule le processus de cristallisation de la fraction lipidique du cacao contenu dans la crème produite dans la phase (102) de fusion et de mélange des matières premières;
- une phase de modélisation (104) dans laquelle le mélange produit à l'issue de l'phase de revenu du mélange (103) est versé dans des moules pour former des plaquettes;
- une phase d'envoi du produit vers un système de réfrigération divisé en quatre zones ou étages avec des températures différentes, en particulier un premier étage avec une température de 5.0 °C à 8.0 °C, un deuxième étage avec une température de 2.0 °C à 5.0 °C, une troisième phase avec une température de 5.0 °C à 8.0 °C, une quatrième phase avec une température de 8.0 °C à 12.0 °C, qui permettent le rétrécissement du beurre de cacao et donc le retrait facile des cabosses du moule ;
- une phase de granulation de dosettes (105), dans laquelle les dosettes produites lors de l'phase de modélisation (104) sont réduites en grains;
- une phase de tamisage (106) dans laquelle la granulométrie comprise entre 500 µm et 4000 µm est choisie parmi le grain produit à la phase de grain en dosette (105);
- une phase de recouvrement (107) dans laquelle le grain sélectionné à l'phase de tamisage (106) est recouvert du film de maltodextrine, de sorte que le recouvrement de maltodextrine représente un pourcentage compris entre 5% et 20% en poids du mélange de masse de cacao enrobée grains, au cours de cette phase (107) les grains sélectionnés dans l'phase de tamisage (106) étant pulvérisés avec un spray d'un mélange d'eau et de maltodextrine dans un rapport de 1: 1, en procédant par phases successives, en attendant chaque injection de solution, le évaporation complète de l'eau, le procédé se poursuivant de préférence jusqu'à ce qu'une augmentation de poids de 15% soit enregistrée, afin d'obtenir une couverture en maltodextrine qui représente environ 12-13% du produit fini.

4. Capsule (1, 2, 3) pour la préparation d'une boisson expresso contenant le mélange à base de cacao pour l'extraction de boissons expresso selon la revendication 1, ladite capsule (1, 2, 3) comprenant un couvercle (8) chauffant - scellée à un fond (9), et au moins une incision (4) pratiquée sur le couvercle (8) ou sur le fond (9) de la capsule (1, 2, 3).

5. Capsule (1, 2, 3) pour la préparation d'une boisson expresso selon la revendication 4, **caractérisée en ce qu'**elle comprend deux ou trois incisions parallèles (4).

6. Capsule (1, 2, 3) pour la préparation d'une boisson expresso selon la revendication 4, **caractérisée en ce qu'**elle comprend au moins deux incisions (4) perpendiculaires l'une à l'autre.

7. Capsule (1, 2, 3) pour la préparation d'une boisson expresso selon la revendication 6, **caractérisée en ce qu** 'elle comprend une incision centrale (4) et deux incisions latérales (4) perpendiculaires à ladite incision centrale (4).

8. Capsule (1, 2, 3) pour la préparation d'une boisson expresso selon la revendication 6, **caractérisée en ce que** les deux incisions (4) perpendiculaires l'une à l'autre sont disposées en croix.

9. Capsule (1, 2, 3) pour la préparation d'une boisson expresso selon la revendication 4, **caractérisée en ce qu** 'elle comprend au moins trois incisions radiales (4).

10. Capsule (1, 2, 3) pour la préparation d'une boisson expresso selon l'une quelconque des revendications 4 à 9, **caractérisée en ce qu** 'elle comprend des trous (5, 6) pratiqués sur le fond (9) lorsque les incisions (4) sont réalisés sur le couvercle (8), ou réalisés sur le couvercle (8) lorsque les incisions (4) sont pratiquées sur le fond (9).

11. Capsule (1, 2, 3) pour la préparation d'une boisson expresso selon la revendication 10, **caractérisée en ce qu'**elle comprend une pluralité de micro-trous (6) d'un diamètre compris entre 0,1 mm et 0,2 mm uniformément répartis sur la surface du couvercle (8).

12. Capsule (1, 2, 3) pour préparer une boisson expresso selon la revendication 10, **caractérisée en ce qu** 'elle comprend une pluralité de trous (5) réalisés sur le fond (9) de la capsule (3).

13. Capsule (1, 2, 3) pour la préparation d'une boisson expresso selon l'une quelconque des revendications 4 à 12, **caractérisée en ce qu'**elle est fermée par un couvercle (8) thermosoudé au fond (9) et réalisé avec un film plastique bi-orienté pelable.

14. Capsule (1, 2, 3) pour la préparation d'une boisson expresso selon l'une quelconque des revendications 4 à 12, **caractérisée en ce qu'**elle est fermée par un couvercle (8) thermosoudé au fond (9) et réalisé avec un triple film métallisé.
